# EUROPÄISCHE PATENTSCHRIFT

(11) **EP 0 620 781 B1**
(45) Veröffentlichungstag und Bekanntmachung des Hinweises auf die Patenterteilung: **19.05.1999**
(21) Anmeldenummer: 93915627.9
(22) Anmeldetag: 05.08.1993
(51) Int. Cl.: B32B 17/10, C04B 12/04, C09J 1/02

(54) **LICHTDURCHLÄSSIGES HITZESCHUTZELEMENT**
LIGHT-TRANSPARENT HEAT-PROTECTION ELEMENT
ELEMENT DE PROTECTION THERMIQUE TRANSPARENT

(30) Priorität: 11.08.1992 CH 2508/92
(43) Veröffentlichungstag der Anmeldung: 26.10.1994
(73) Patentinhaber: Vetrotech Saint-Gobain (International) AG, 6318 Walchwill (CH)
(72) Erfinder: EGLI, Walter, CH-4153 Reinach (CH); SEIDEL, Horst, CH-6318 Walchwil (CH); FROMMELT, Simon, D-42781 Haan (DE); GIESBRECHT, Christoph, CH-3044 Muri (CH)
(74) Vertreter: Bruderer, Werner
(86) Internationale Anmeldenummer: CH9300197
(87) Internationale Veröffentlichungsnummer: WO9404355

(56) Entgegenhaltungen:
- EP-A- 0 132 507
- DE-C- 4 001 677
- FR-A- 2 399 513
- FR-A- 2 607 491
- LU-A- 60 053
- CHEMICAL ABSTRACTS, vol. 107, no. 16, Oktober 1987, Columbus, Ohio, US; abstract no. 139755w, SMOLIN V. A. 'METHOD FOR MANUFACTURING HEAT- AND RESISTANT COATINGS' Seite 351 ;Spalte L ;

## Beschreibung

Die Erfindung betrifft ein lichtdurchlässiges Hitzeschutzelement mit mindestens einem Trägerelement und einer Schutzschicht aus wasserhaltigem Alkalisilikat sowie ein Verfahren zur Herstellung von Hitzeschutzelementen.

Lichtdurchlässige Hitzeschutzelemente dieser Art sind in verschiedenen Ausführungsformen bekannt und werden unter anderem als Bauelemente eingesetzt. Als Trägerelemente dienen zumeist Glasplatten, wobei jedoch auch andere lichtdurchlässige Materialien wie zum Beispiel Kunststoffe verwendet werden. Besonders hohe Ansprüche an den Hitzeschutz werden dabei an Bauelemente gestellt, welche in der Form von Verglasungen Abgrenzungen von Räumen bilden oder für Türen eingesetzt werden. Aus der Publikation DE C3 19 00 054 sind hitzeisolierende lichtdurchlässige Verbundgläser bekannt, bei welchen zwischen zwei Glasflächen eine Schicht aus getrocknetem wasserhaltigem Alkalisilikat angeordnet ist. Bei Einwirkung von Hitze auf dieses Verbundglas, zum Beispiel bei einem Brandfall, schäumt die Zwischenschicht aus Alkalisilikat auf, und das in der Alkalisilikatschicht enthaltene Wasser verdampft. Die Zwischenschicht wird dadurch für die Wärmestrahlung undurchlässig und bildet für eine bestimmte Zeit einen wirksamen Schutz gegen den unerwünschten Wärmedurchgang. Trotzdem mindestens eine der Glasplatten zersplittert, haften die Glasteile an der aufgeblähten Schaumschicht. Zur Verbesserung des Hitzeschutzes werden mehrere Glasplatten und Zwischenschichten aus Alkalisilikat hintereinander angeordnet. Bei der Herstellung derartiger Verbundgläser wird auf einer Seite einer Glasplatte eine dünne Schicht von Alkalisilikat in flüssiger Form aufgetragen und anschliessend durch Entzug des überschüssigen Wassers, zum Beispiel durch Wärmeeinwirkung, getrocknet. Dieser Trocknungsprozess ist aufwendig und erfordert eine bestimmte Trocknungszeit, wodurch der Herstellungsvorgang verzögert wird. Die zweite Glasplatte muss dann anschliessend auf die Zwischen-, bzw. Schutzschicht aus Alkalisilikat aufgeklebt werden. Die Herstellung derartiger Verbundgläser stellt hohe Anforderungen an die Produktionsbedingungen um sicherzustellen, dass keine Trübung des Verbundglases durch Luftblasen oder andere Herstellungsfehler entsteht.

Aus EP-A2-192 249 ist es im weiteren bekannt, das Alkalisilikat der Zwischenschicht in der Form einer Hydrogelschicht mit höherem Wassergehalt einzubringen. Diese Hydrogelschichten weisen einen Wassergehalt von 80 bis 90% auf und sind deshalb nicht selbsttragend. Derartige Hydrogelschichten werden vorgeschlagen um die optischen Eigenschaften der Zwischenschicht zu verbessern und die Festigkeit zu erhöhen. Trotzdem weisen Hydrogelschichten dieser Art in sich selbst keine genügende Kohäsion und gegenüber den angrenzenden Glasschichten keine genügende Adhäsion auf. Deshalb wird in einer vorteilhaften Ausgestaltung vorgeschlagen, zur Verfestigung der Schicht ein organisches Bindemittel, zum Beispiel Gummiarabicum, zuzumischen. Die Zumischung dieses Bindemittels ist notwendig um zu verhindern, dass das Hydrogel aus dem Zwischenraum zwischen den Verbundgläsern oder beim Zerspringen einer der Glasscheiben ausläuft. Die Nachteile der ungenügenden Kohäsion und Adhäsion der Hydrogelschicht sind beachtlich und erfordern zusätzliche aufwendige Massnahmen. Der Gehalt an Siliziumdioxid in der Schicht beträgt maximal 20 Gewichtsprozente und das Molverhältnis zwischen Siliziumdioxid und Natriumoxid als Alkali-Metalloxid bewegt sich zwischen zwei bis maximal vier.

FR-A-2 607 491 beschreibt eine Feuerschutz-Verglasung, welche mindestens eine Schicht aus aufschäumbarem Alkalisilikat umfasst. Um die Alterungsbeständigkeit zu erhöhen und Trübungen zu vermeiden, enthält die Schicht mindestens ein silikatstabilisierendes Mittel. Die Alkalischicht wird flüssig auf eine Glasplatte gegossen und anschliessend wird durch physikalische Trocknung Wasser entzogen und die Schicht wird durch die Trocknung hart. Die fertige Schutzschicht hat einen niedrigen Wassergehalt von 25 bis 35 Gewichts-%. Im weiteren wird für die Alkalisilikatschicht ein Gewichtsverhältnis von SiO₂:Na₂O von 3 bis 4 als optimal empfohlen. Dieses Verhältnis wird bereits in der Giessmasse eingestellt. Auch diese Verglasung und das entsprechende Herstellungsverfahren weisen den Nachteil auf, dass der physikalische Trocknungsprozess aufwendig ist und die Trocknungszeit sowie das Verkleben mit der zweiten Scheibe das Herstellverfahren verzögert. Der Wassergehalt der Schicht ist relativ niedrig und höhere Anteile von SiO₂ in der Alkalisilikatschicht würden die Qualität der Schicht reduzieren.

Aus FR-A-2 399 513 ist ebenfalls eine Brandschutzwand bekannt, welche aus mindestens einer Glasscheibe und einer blähbaren Schicht aus hydratisiertem Alkalimetallsilikat besteht. Der Schicht werden Hilfsstoffe beigemengt, welche die Feuerbeständigkeit erhöhen sollen. Wie bei den oben bereits beschriebenen und bekannten Lösungen wird auch diese Alkalimetallschicht flüssig auf die Glasplatte gegossen und bildet einen Film, welcher physikalisch, durch Entzug von Wasser getrocknet wird. Das flüssige Ausgangsmaterial wird vor dem Vergiessen fertig gemischt und der Anteil an SiO₂ ist bereits in dieser Mischung vorhanden und es erfolgt keine Reaktion. Das Gewichtsverhältnis von SiO₂:Na₂O in der Alkalimetallschicht liegt unter 4 und der Restwassergehalt nach der Trocknung liegt unter 35%. Auch diese Schutzschicht muss in relativ schwieriger Weise mit einer zweiten Scheibe zu einem Sandwichverbund verklebt werden und der Anteil an SiO₂ kann nicht erhöht werden. Zudem besteht die Gefahr, dass die Schicht bei zu hohem Anteil an Hilfsstoffen trüb wird. Mindestens bei einem der vorgeschlagenen Hilfsstoffe,nämlich mehrwertigen Alkoholen besteht die Gefahr, dass die Feuerbeständigkeit reduziert und nicht verbessert wird.

Obwohl diese bekannten lichtdurchlässigen Hitzeschutzelemente in Bezug auf Hitze- und Brandschutz bereits hohen Anforderungen zu genügen vermögen, sind sie in Bezug auf Verarbeitung und Aufbringung der Zwischenschicht aus wasserhaltigem Alkalisilikat noch unbefriedigend. Der Erfindung liegt deshalb die Aufgabe zu Grunde, ein lichtdurchlässiges Hitzeschutzelement zu schaffen, welches eine hohe Transparenz und Alterungsbeständigkeit aufweist, bei welchem die Schutz-, bzw. Zwischenschicht durch Vergiessen und ohne Trocknung herstellbar ist, und die Schutzschicht eine gute Eigenfestigkeit sowie Haftung zu den angrenzenden Trägerelementen aufweist. Die Ausgangsmasse für die Schutzschicht soll fliessfähig und zum Eingiessen in Hohlräume geeignet sein und anschliessend in angemessener Zeit zur Schutzschicht aushärten.

Diese Aufgabe wird erfindungsgemäss dadurch gelöst, dass die Schutzschicht ein aus Alkalisilikat und mindestens einem Härter gebildetes ausgehärtetes Polysilikat ist, und dass im Polysilikat ein Molverhältnis von Siliziumdioxid zu Alkali-Metalloxid besteht, welches grösser als 4:1 ist und dass die ausgehärtete Schutzschicht im wesentlichen das gesamte ursprünglich vorhandene Wasser der wasserhaltigen Mischung aus Alkalisilikat und Härter noch enthält, wobei der Wasseranteil 44 bis maximal 60 Gewichts-% beträgt und gleichzeitig der Anteil an Siliziumdioxid in der Schutzschicht zwischen 30 bis 55 Gewichts-% liegt. Als Alkalisilikat wird vorzugsweise ein Lithium-, Natrium- oder Kaliumsilikat oder eine Mischung davon und als Alkali-Metalloxid ein Natrium-, Kalium- oder Lithiumoxid oder eine Mischung davon eingesetzt.

Als Härter kommen vorzugsweise mit Alkalisilikat reaktionsfähige Siliziumverbindungen welche Siliziumoxid enthalten in Frage, wobei Kieselsäure oder Verbindungen welche Kieselsäure in wässriger Lösung freisetzen bevorzugt eingesetzt werden. Die Verwendung zusätzlicher anderer, nicht Si-haltiger Verbindungen als Härter, bzw. Zusatz-Härter, wird dadurch nicht ausgeschlossen. Geeignet sind alle Verbindungen, die durch die Reaktion mit Alkalisilikat keine unlöslichen Niederschläge bilden und dadurch die optischen Eigenschaften negativ beeinflussen würden. Bevorzugt werden Verbindungen aus der Gruppe der anorganischen und organischen Säuren, Ester, Säureamide, Glyoxale, Alkylenkarbonate, Alkalikarbonate und -hydrogenkarbonate, Borate, Phosphate und para-Formaldehyde ausgewählt. Diese können in Kombination mit dem Haupthärter aus Kieselsäure in geringen Mengen, üblicherweise weniger als 5 Prozent, eingesetzt werden, ohne dass dadurch die Transparenz der Polysilikatschicht beeinträchtigt wird.

Diese Schutzschicht aus ausgehärtetem Polysilikat weist eine gute Eigenfestigkeit auf und bildet eine gute Haftung zu den angrenzenden Trägerelementen in der Form von Glasplatten oder anderen lichtdurchlässigen Bauelementen. Die Ausgangsmasse ist fliessfähig und leicht vergiessbar. Die ausgehärtete Schutzschicht ist von hoher optischer Qualität und Durchlässigkeit und weist eine gute Alterungsbeständigkeit auf. Die besonderen Eigenschaften der Schutzschicht in der Form des ausgehärteten Polysilikates werden dadurch erreicht, dass die Polysilikatschicht einen Gehalt an Siliziumdioxid zwischen 30 bis 55 Gewichts-% aufweist. Der Gehalt an Alkali-Metalloxid (M₂O) in der Form von Natrium-, Kalium- oder Lithiumoxid oder einer Mischung davon beträgt maximal 16 Gewichts-%. Die ausgehärtete Polysilikatschicht enthält 44 bis zu 60 Gewichts-% Wasser. Dadurch erreichen Hitzeschutzelemente mit einer erfindungsgemässen Schutzschicht einen sehr hohen Feuerwiderstandswert, da für den Verdampfungsprozess eine relativ grosse Wassermenge zur Verfügung steht. Der hohe Gehalt an Siliziumdioxid wird dadurch erreicht, dass der Härter eine siliziumhaltige Verbindung, vorteilhafterweise Kieselsäure oder eine Kieselsäure abspaltende Verbindung ist. In vorteilhafter Weise ist bei einem lichtdurchlässigen Hitzeschutzelement die Polysilikatschicht zwischen zwei Glasplatten angeordnet und bildet mit diesen ein Verbundelement. Zur Erreichung von höheren Hitzewider- standswerten werden Hitzeschutzelemente gebildet, bei welchen das Hitzeschutzelement aus mehreren jeweils zwischen zwei Glasplatten angeordneten Polysilikatschichten besteht und die Glasplatten und die Polysilikatschichten ein Verbundelement bilden. Bei diesen erfindungsgemässen Anordnungen sind die Polysilikatschichten in direkter Verbindung mit den angrenzenden die Trägerelemente bildenden Glasplatten. Die Haftung zwischen Polysilikatschichten und Glasplatten ermöglicht die direkte Bildung der Verbundelemente ohne zusätzlichen Klebevorgang, wodurch der Herstellungsprozess wesentlich vereinfacht wird.

Das Verfahren zur Herstellung eines lichtdurchlässigen Hitzeschutzelementes unter Verwendung eines wasserhaltigen Alkalisilikates ist gemäss der Erfindung dadurch gekennzeichnet, dass das Alkalisilikat mit einem Härter welcher Siliziumdioxid enthält oder freisetzt zusammengefügt und eine giessfähige Masse gebildet wird, diese Masse in einen Formhohlraum eingebracht oder auf ein Trägerelement aufgebracht wird, anschliessend die Masse unter Erhaltung des Wassergehaltes zu einer festen Polysilikatschicht ausgehärtet wird und dabei im ausgehärteten Polysilikat das Molverhältnis von Siliziumdioxid zu Alkali-Metalloxiden auf ein Verhältnis, welches grösser als 4:1 ist, eingestellt wird.

Das erfindungsgemässe Verfahren ermöglicht somit Verbundelemente, welche aus mehreren mit einem Abstand zueinander angeordneten Trägerelementen bestehen, zusammenzustellen und anschliessend den Zwischenraum zwischen den Trägerelementen mit der giessfähigen Masse aus Alkalisilikat und einem oder mehreren Härtern auszugiessen. Infolge des hohen Wassergehaltes ist die Masse sehr gut fliessfähig und kann ohne Schwierigkeiten auch in die Zwischenräume von Verbundverglasungen mit geringem Abstand zwischen den Glasplatten eingegossen werden. Da die Masse ohne Trocknung, d.h. ohne Abgabe von Wasser, zu einer festen Polysilikatschicht aushärtet kann auf den Trocknungsvorgang verzichtet werden, was die Herstellung entsprechender Hitzeschutzelemente wesentlich vereinfacht. Die Reaktions-, bzw. Aushärtzeit kann in bekannter Weise durch Erwärmen beschleunigt werden. Die Topfzeit der giessfähigen Masse ist bei Raumtemperatur auf alle Fälle genügend lang um einen normalen Produktionsablauf zu ermöglichen. Bei der Herstellung der Hitzeschutzelemente kann die Masse wie beschrieben in einen Formhohlraum zwischen zwei Trägerelementen eingebracht, bzw. eingegossen werden. Es ist aber auch möglich, die Masse auf ein Trägerelement aufzubringen und anschliessend ein zweites Trägerelement auf die noch nicht ausgehärtete Schutzschicht aufzulegen oder das zweite Trägerelement nach dem Aushärten der Schutzschicht in der bekannten Weise mit dieser zu verkleben. Letzteres wäre jedoch nur dann zweckmässig, wenn auf herkömmlichen Anlagen zur Herstellung der bekannten Hitzeschutzelemente lichtdurchlässige Hitzeschutzelemente mit der erfindungsgemässen Schutzschicht hergestellt werden sollten. Ein Teil der Vorteile bleibt dann immer noch erhalten, da kein Trocknungsprozess notwendig ist und die Aushärtung der Masse zur Polysilikatschicht ohne Abgabe von Wasser, d.h. bei Erhaltung des Wassergehaltes erfolgt.

Vorzugsweise wird die Masse aus Alkalisilikat und Härter vor dem Verarbeiten entgast. Dadurch wird sichergestellt, dass in der ausgehärteten Polysilikatschicht keine Gaseinschlüsse vorhanden sind, welche die optische Qualität des erfindungsgemässen Hitzeschutzelementes stören könnten. Die Entgasung kann jedoch auch erst nach dem Befüllen der Hohlräume erfolgen. Zur Steigerung der Adhäsion der Polysilikatschicht an den Trägerelementen kann der Masse vor dem Verarbeiten ein Hilfsmittel in Form von anionischen oder nichtionogenen Tensiden zugefügt werden und/oder es können die Trägerschichten mit einem solchen Mittel vorbehandelt sein. Die Trägerschichten können in bevorzugter Weise auch mit einem Haftvermittler, vorzugsweise mit einem organofunktionellen Silan vorbehandelt sein.

Als Trägerelemente für das erfindungsgemässe lichtdurchlässige Hitzeschutzelement sind nicht nur Elemente aus Glas, insbesondere Glasplatten, sondern auch andere Werkstoffe mit den gewünschten optischen Eigenschaften geeignet, sofern sie den technischen und physikalischen Anforderungen, zum Beispiel an Hitzebeständigkeit, genügen. Der Widerstandswert der Hitzeschutzschicht wird in jedem Falle durch den erhöhten Wassergehalt verbessert. Als Trägermaterial kann auch ganz oder teilweise, thermisch oder chemisch vorgespanntes Glas verwendet werden.

Die folgenden Beispiele veranschaulichen die vorliegende Erfindung.

### Beispiel 1

Ein Hitzeschutzelement besteht aus einer Verglasung, welche aus vier Glasscheiben so zusammengebaut ist, dass zwischen je zwei Glasscheiben ein Abstand von einem Millimeter entsteht. Entlang der Kanten der Glasscheiben werden die Schmalseiten der Hohlräume zwischen den Glasscheiben um des ganzen Umfanges der Glasscheiben in bekannter Weise mit einem geeigneten Dichtungsmaterial versiegelt. Zu jedem Hohlraum zwischen je zwei Glasscheiben wird eine Einfüllöffnung offengelassen. Aus einem Alkalisilikat in der Form eines Kaliumsilikates und kolloidaler Kieselsäure wird eine giessfähige Masse zubereitet, welche zu einem Polysilikat mit einem Molverhältnis von SiO₂ zu K₂O gleich 4,7:1 aushärtet. Diese flüssige Masse wird in bekannter Weise einem Entgasungsprozess unterworfen und dann durch die Einfüllöffnungen in die Hohlräume zwischen je zwei Glasscheiben eingefüllt. Die Masse ist dabei so fliessfähig, dass sie ohne Schwierigkeiten eingefüllt werden kann und dabei die in den Hohlräumen enthaltene Luft zu verdrängen vermag, ohne dass eine Vermischung erfolgt. Nach dem vollständigen Füllen der Hohlräume werden auch die Einfüllöffnungen versiegelt. Das auf diese Weise gebildete Verbundelement aus vier Glasscheiben und drei dazwischen liegenden Schutzschichten aus Polysilikat wird in einer geeigneten Position gelagert bis der Reaktionsprozess abgeschlossen ist und das ausgehärtete Polysilikat der drei Schutzschichten die gewünschte Eigenfestigkeit und Haftung zu den Glasplatten erreicht hat. Zur Beschleunigung der Reaktion wird die Temperatur auf 60°C erhöht. Nach vollständiger Aushärtung des Polysilikates können die auf diese Weise gebildeten Verbundelemente in jeder für Verbundglaselemente bekannten Weise gehandhabt und auch in andere Formen geschnitten werden. Die zwischen den Glasplatten angeordnete Schutzschicht aus ausgehärtetem Polysilikat weist dabei einen Wassergehalt von 47 Gewichtsprozenten auf. Die zwischen den Glasscheiben angeordneten ausgehärteten Polysilikatschichten schmälern die optischen Eigenschaften des Glasplattenverbundes in keiner Weise, und das auf diese Weise hergestellte Hitzeschutzelement zeichnet sich durch optimale Feuerwiderstandseigenschaften aus.

### Beispiel 2

In einer abgeänderten Variante gemäss Beispiel 1 wurde eine Füllmasse verwendet, bei der ein Gemisch von Kalium- und Lithiumsilikat im Verhältnis von 8.5 : 1.5 und eine 30%-ige Kieselsäuredispersion in Wasser in einem Mengenverhältnis so zur Reaktion gebracht wurden, dass ein K-Li-Polysilikat mit einem Molverhältnis von SiO₂ zu (K₂O+Li₂O)= 5.0:1 resultiert. Vor dem Einfüllen der Masse wurde dieser 15 Prozent eines Gefrierpunkt senkenden Mittels in Form eines Polyols zugefügt. Der Wassergehalt des ausgehärteten Polysilikates beträgt 51.2 Gewichtsprozent. Die Feuerwiderstandseigenschaften sind praktisch identisch mit denjenigen des Elementaufbaus im Beispiel 1.

### Beispiel 3

In einer variierten Ausführungsform der Beispiele 1 und 2 werden 35 Mol-Prozente des Kaliumions durch Natrium ersetzt und als Härter eine hydratisierte, gefällte Kieselsäure mit einem Wassergehalt von 21 Prozent eingesetzt. Der Wassergehalt des ausgehärteten Polysilikates liegt bei 44 Gewichtsprozent. Das Molverhältnis von SiO₂ zu (K₂O+Li₂O+Na₂O) beträgt hier ebenfalls 5.0:1.

## Patentansprüche

1. Lichtdurchlässiges Hitzeschutzelement mit mindestens einem Trägerelement und einer Schutzschicht aus wasserhaltigem Alkalisilikat, dadurch gekennzeichnet, dass die Schutzschicht ein aus Alkalisilikat und mindestens einem Härter gebildetes, ausgehärtetes Polysilikat ist und dass im Polysilikat ein Molverhältnis von Siliziumdioxid zu Alkali-Metalloxid besteht welches grösser als 4:1 ist und dass die ausgehärtete Schutzschicht im wesentlichen das gesamte ursprünglich vorhandene Wasser der wasserhaltigen Mischung aus Alkalisilikat und Härter noch enthält, wobei der Wasseranteil 44 bis maximal 60 Gewichts-% beträgt und gleichzeitig der Anteil an Siliziumdioxid in der Schutzschicht zwischen 30 bis 55 Gewichts-% liegt.

2. Hitzeschutzelement nach Patentanspruch 1, dadurch gekennzeichnet, dass das Alkalisilikat ein Lithium-, Natrium- oder Kaliumsilikat oder eine Mischung davon ist.

3. Hitzeschutzelement nach Patentanspruch 1 oder 2, dadurch gekennzeichnet, dass das Alkali-Metalloxid ein Natrium-, Kalium- oder Lithiumoxid oder eine Mischung davon ist.

4. Hitzeschutzelement nach einem der Patentansprüche 1 bis 3, dadurch gekennzeichnet, dass die Polysilikatschicht maximal 16 Gewichts-% Alkali-Metalloxid enthält.

5. Hitzeschutzelement nach einem der Patentansprüche 1 bis 4, dadurch gekennzeichnet, dass die Polysilikatschicht ein Mittel zur Senkung des Gefrierpunktes des Wasseranteiles enthält.

6. Hitzeschutzelement nach einem der Patentansprüche 1 bis 5, dadurch gekennzeichnet, dass der Härter eine Siliziumoxid enthaltende Verbindung ist.

7. Hitzeschutzelement nach Patentanspruch 6, dadurch gekennzeichnet, dass der Härter Kieselsäure oder eine Kieselsäure abspaltende Verbindung ist.

8. Hitzeschutzelement nach Patentanspruch 6, dadurch gekennzeichnet, dass ein weiterer zusätzlicher Härter hinzugefügt ist und dieser zusätzliche Härter aus der Gruppe der anorganischen oder organischen Säuren, Ester, Säureamide, Glyoxale, Alkylenkarbonate, Alkalikarbonate und -hydrogenkarbonate, Borate, Phosphate oder para-Formaldehyde ausgewählt ist.

9. Hitzeschutzelement nach einem der Patentansprüche 1 bis 8, dadurch gekennzeichnet, dass die Polysilikatschicht zwischen zwei Glasplatten angeordnet ist und mit diesen ein Verbundelement bildet.

10. Hitzeschutzelement nach einem der Patentansprüche 1 bis 9, dadurch gekennzeichnet, dass das Hitzeschutzelement aus mehreren jeweils zwischen zwei Glasplatten angeordneten Polysilikatschichten besteht und die Glasplatten und die Polysilikatschichten ein Verbundelement bilden.

11. Verfahren zur Herstellung eines lichtdurchlässigen Hitzeschutzelementes unter Verwendung eines wasserhaltigen Alkalisilikates, dadurch gekennzeichnet, dass das Alkalisilikat mit einem Härter welcher Siliziumdioxid enthält oder freisetzt zusammengefügt und eine giessfähige Masse gebildet wird, diese Masse in einen Formhohlraum zwischen zwei Trägerelementen eingebracht oder auf ein Trägerelement aufgebracht wird, anschliessend die Masse unter Erhaltung des Wassergehaltes zu einer festen Polysilikatschicht ausgehärtet wird und dabei im ausgehärteten Polysilikat das Molverhältnis von Siliziumdioxid zu Alkali-Metalloxiden auf ein Verhältnis welches grösser als 4:1 ist, eingestellt wird.

12. Verfahren nach Patentanspruch 11, dadurch gekennzeichnet, dass die Masse vor dem Verarbeiten einem Entgasungsvorgang unterworfen wird.

13. Verfahren nach Patentanspruch 11, dadurch gekennzeichnet, dass zur Erhöhung der Adhäsion zwischen Polysilikatschicht und Trägerelementen der Masse ein anionisches oder nichtionogenes Tensid zugefügt wird und/oder die Oberflächen der Trägerelemente mit einem derartigen Tensid vorbehandelt werden.

14. Verfahren nach Patentanspruch 11, dadurch gekennzeichnet, dass die Oberflächen der Trägerelemente mit einem Haftvermittler in der Form eines organofunktionellen Silan vorbehandelt werden.

## Claims

1. Light-transparent heat-protection element with at least one carrier element and a protective layer comprising hydrous alkali silicate, characterized in that the protective layer is a hardened polysilicate formed of alkali silicate and at least one hardener and in that in the polysilicate there is a molar ratio of silicon dioxide to alkali metal oxide which is greater than 4:1 and in that the hardened protective layer substantially still contains the total originally present water of the hydrous mixture comprising alkali silicate and hardener, wherein the water content is 44 to max. 60 wt.% and at the same time the silicon dioxide content in the protective layer is between 30 and 55 wt.%.

2. Heat-protection element according to Claim 1, characterized in that the alkali silicate is a lithium, sodium or potassium silicate or a mixture thereof.

3. Heat-protection element according to Claim 1 or 2, characterized in that the alkali metal oxide is a sodium, potassium or lithium oxide or a mixture thereof.

4. Heat-protection element according to one of Claims 1 to 3, characterized in that the polysilicate layer contains 16 wt.% maximum of alkali metal oxide.

5. Heat-protection element according to one of Claims 1 to 4, characterized in that the polysilicate layer contains a substance for reducing the freezing point of the water component.

6. Heat-protection element according to one of Claims 1 to 5, characterized in that the hardener is a compound containing silicon oxide.

7. Heat-protection element according to Claim 6, characterized in that the hardener is silicic acid or a compound which splits off silicic acid.

8. Heat-protection element according to Claim 6, characterized in that a further additional hardener is added and this additional hardener is selected from the group of the inorganic or organic acids, esters, acid amides, glyoxals, alkylene carbonates, alkali carbonates and -hydrogen carbonates, borates, phosphates or paraformaldehyde.

9. Heat-protection element according to one of Claims 1 to 8, characterized in that the polysilicate layer is arranged between two panes of glass and forms a compound element therewith.

10. Heat-protection element according to one of Claims 1 to 9, characterized in that the heat-protection element consists of several polysilicate layers each arranged between two panes of glass and the panes of glass and the polysilicate layers form a compound element.

11. Process for producing a light-transparent heat-protection element using a hydrous alkali silicate, characterized in that the alkali silicate is combined with a hardener which contains or liberates silicon dioxide and a pourable compound is formed, this compound is placed into a mould cavity between two carrier elements or applied to a carrier element, the compound is then hardened to a solid polysilicate layer while maintaining the water content and in the hardened polysilicate the molar ratio of silicon dioxide to alkali metal oxides is set to a ratio which is greater than 4:1.

12. Process according to Claim 11, characterized in that the compound is subjected to a degassing process prior to processing.

13. Process according to Claim 11, characterized in that to increase the adhesion between polysilicate layer and carrier elements an anionic or non-ionogenic surfactant is added to the compound and/or the surfaces of the carrier elements are pre-treated with such a surfactant.

14. Process according to Claim 11, characterized in that the surfaces of the carrier elements are pre-treated with an adhesion promoter in the form of an organofunctional silane.

## Revendications

1. Elément de protection thermique transparent comportant au moins un élément de support et une couche de protection en silicate alcalin hydraté, caractérisé en ce que la couche de protection est un polysilicate durci à coeur obtenu à partir de silicate alcalin et d'au moins un durcisseur et que dans le polysilicate, la proportion molaire de dioxyde de silicium et de l'oxyde de métal alcalin est supérieure à 4:1, et que la couche de protection durcie à coeur contient essentiellement encore la totalité de l'eau originellement présente dans le mélange aqueux de silicate alcalin et de durcisseur, la proportion d'eau étant de 44 à maximum 60% en poids et simultanément la fraction de dioxyde de silicium dans la couche de protection étant de 30 à 55% en poids.

2. Elément de protection thermique selon la revendication 1, caractérisé en ce que le silicate alcalin est un silicate de lithium, sodium ou potassium ou un de leurs mélanges.

3. Elément de protection thermique selon la revendication 1 ou 2, caractérisé en ce que l'oxyde de métal alcalin est un oxyde de sodium, potassium ou lithium ou un de leurs mélanges.

4. Elément de protection thermique selon l'une des revendications 1 à 3, caractérisé en ce que la couche de polysilicate contient au maximum 16% en poids d'oxyde de métal alcalin.

5. Elément de protection thermique selon l'une des revendications 1 à 4, caractérisé en ce que la couche de polysilicate contient un additif qui abaisse le point de congélation de la fraction d'eau.

6. Elément de protection thermique selon l'une des revendications 1 à 5, caractérisé en ce que le durcisseur est un composé contenant un oxyde de silicium.

7. Elément de protection thermique selon la revendication 6, caractérisé en ce que le durcisseur est de l'acide silicique ou un composé libérant de l'acide silicique.

8. Elément de protection thermique selon la revendication 6, caractérisé en ce qu'il lui est ajouté un autre durcisseur additionnel et que ce durcisseur additionnel est choisi dans le groupe des acides inorganiques ou organiques, esters, amides d'acide, glyoxals, carbonates d'alkylène, carbonates et hydrogénocarbonates alcalins, borates, phosphates ou paraformaldéhydes.

9. Elément de protection thermique selon l'une des revendications 1 à 8, caractérisé en ce que la couche de polysilicate est placée entre deux plaques de verre et forme avec elles un élément sandwich.

10. Elément de protection thermique selon l'une des revendications 1 à 9, caractérisé en ce que l'élément de protection thermique est constitué de plusieurs couches de polysilicate à chaque fois insérées entre deux plaques de verre, et que les plaques de verre et les couches de polysilicate forment un élément sandwich.

11. Procédé de fabrication d'un élément de protection thermique transparent au moyen d'un silicate alcalin hydraté, caractérisé en ce que le silicate alcalin est mêlé à un durcisseur qui contient ou libère du dioxyde de silicium, le tout formant une masse apte à la coulée, laquelle masse est introduite dans un creux de moulage entre deux éléments de support ou appliquée sur un élément de support, puis durcie, sans perte de sa teneur en eau, en une couche de polysilicate solide et que, dans le polysilicate durci à coeur, le rapport molaire entre le dioxyde de silicium et les oxydes de métal alcalin est ajusté à une proportion supérieure à 4:1.

12. Procédé selon la revendication 11, caractérisé en ce que la masse est, avant sa mise en oeuvre, soumise à un processus de dégazage.

13. Procédé selon la revendication 11, caractérisé en ce que, pour augmenter l'adhérence entre la couche de polysilicate et les éléments de support de la masse, on ajoute un agent tensio-actif anionique ou non ionogène et/ou que les surfaces des éléments de support sont prétraitées au moyen d'un tel agent tensioactif.

14. Procédé selon la revendication 11, caractérisé en ce que les surfaces des éléments de support sont prétraitées au moyen d'un promoteur d'adhésivité sous la forme d'un silane organofonctionnel.
